# EUROPÄISCHE PATENTSCHRIFT

(11) **EP 1 156 952 B1**
(45) Veröffentlichungstag und Bekanntmachung des Hinweises auf die Patenterteilung: **12.01.2011**
(21) Anmeldenummer: 00963955.0
(22) Anmeldetag: 01.09.2000
(51) Int. Cl.: B60T 8/172

(54) **VORRICHTUNG UND VERFAHREN ZUR REGELUNG DES RADSCHLUPFES NACH EINER SCHLEUDERERKENNUNG**
DEVICE AND METHOD FOR CONTROLLING THE WHEEL SLIP AFTER SWERVING HAS BEEN DETECTED
DISPOSITIF ET PROCEDE DE REGULATION DU GLISSEMENT DE ROUES APRES DETECTION D'UN DERAPAGE

(30) Priorität: 30.12.1999 DE 19963748
(43) Veröffentlichungstag der Anmeldung: 28.11.2001
(73) Patentinhaber: ROBERT BOSCH GMBH, 70442 Stuttgart (DE)
(72) Erfinder: MUELLER, Elmar, 71706 Markgröningen (DE)
(86) Internationale Anmeldenummer: PCT/DE2000/002992
(87) Internationale Veröffentlichungsnummer: WO 2001/049540

(56) Entgegenhaltungen:
- DE-A- 3 827 883
- DE-A- 3 841 295
- DE-A- 19 632 068

## Beschreibung

Die vorliegende Erfindung betrifft eine Vorrichtung und ein Verfahren zur Regelung des Radschlupfes für ein Kraftfahrzeug nach dem Oberbegriff des Patentanspruches 1 bzw. dem Oberbegriff des Patentanspruchs 4.

Vorrichtungen zur Regelung des Radschlupfes sind in verschiedenen Ausführungen bekannt. Beispielsweise kann es sich bei solch einer Vorrichtung zur Regelung des Radschlupfes um ein Antiblockiersystem, auch Bremsschlupfregler genannt, handeln. Mit diesem wird in bekannter Weise der Bremsschlupf durch einen vom Fahrer unabhängige Bremsdruckabbau so geregelt, daß ein Blockieren der vom Fahrer gebremsten Räder vermieden wird (Antiblockierreglerfunktion, Bremsschlupfreglerfunktion; ABS). Die Vorrichtung zur Regelung des Radschlupfes kann auch als Antriebsschlupfregler ausgebildet sein, mit dem der Antriebsschlupf der Antriebsräder zumindest durch einen unabhängig vom Fahrer durchgeführten Bremsdruckaufbau so geregelt wird, daß ein Durchdrehen der Antriebsräder, beispielsweise bei einem Anfahrvorgang, vermieden wird (Antriebsschlupfreglerfunktion; ASR). Ferner ist es denkbar, daß die Vorrichtung zur Regelung des Radschlupfes auch als Fahrdynamikregelung bzw. Gierratenregelung (FDR; ESP) ausgebildet ist, wie.sie beispielsweise aus der in der Automobiltechnischen Zeitschrift (ATZ) 96, 1994, Heft 11, auf den Seiten 674 bis 689 erschienenen Veröffentlichung "FDR - Die Fahrdynamikregelung von Bosch" bekannt ist.

Die folgenden Ausführungen beziehen sich im wesentlichen auf eine Vorrichtung zur Regelung des Radschlupfes, mit der zumindest der Bremsschlupf regelbar ist. Dies soll allerdings keine Einschränkung darstellen, der erfindungsgemäße Gegenstand kann in allen der vorstehend aufgeführten Vorrichtungen zur Regelung des Radschlupfes eingesetzt werden. Eine Antriebsschlupfregelung ist für gewöhnlich mit einer Bremsschlupfregelung kombiniert. Eine Fahrdynamikregelung besteht zum einem aus einem überlagerten Gierratenregler und zum anderen aus einem Bremsschlupfregler und einem Antriebsschlupfregler, die beide dem Gierratenregler unterlagert sind. Wie nachfolgend noch ausgeführt wird, unterscheiden sich mit Blick auf den erfindungsgemäßen Gegenstand das Antiblockierregelsystem bzw. die Bremsschlupfregelgung einerseits und die Antriebsschlupfregelung bzw. die Fahrdynamikregelung andererseits in erster Linie in der Art und Weise, wie die Räder bei einem erkannten Schleudern in hohen Schlupf bzw. zum Blockieren gebracht werden.

Gerät ein Fahrzeug, welches nicht mit einer Vorrichtung zur Regelung des Radschlupfes ausgestattet ist, mit der zumindest der Bremsschlupf regelbar ist, beim Bremsen mit blockierten Rädern ins Schleudern, so bleibt im allgemeinen die vor dem Schleudervorgang bestehende Bewegungsrichtung des Schwerpunktes des Kraftfahrzeuges erhalten, da blockierte Räder keine Seitenkräfte übertragen können. Ebenso verhält sich solch ein Fahrzeug, wenn es ungebremst aufgrund des Überschreitens fahrdynamischer Grenzen ins Schleudern gerät und der Fahrer im Schleudervorgang die Bremse betätigt, so daß die Räder blockieren.

Eine Vorrichtung zur Regelung des Radschlupfes, mit der zumindest der Bremsschlupf regelbar ist, verhindert das Auslösen eines Schleudervorganges beim Bremsen, solange fahrdynamische Grenzen (z.B. überhöhte Kurvengeschwindigkeit) nicht überschritten werden. Wird jedoch in einem Schleudervorgang gebremst, oder wird ein Schleudervorgang während einer geregelten Bremsung ausgelöst, können die Räder aufgrund der Bremsschlupfregelung, mit der ein Blockieren der Räder vermieden werden soll, weiterhin Seitenführungskräfte übertragen. Solange die Gierwinkelgeschwindigkeit bzw. der Schwimmwinkel des Fahrzeugs nicht zu groß sind, kann der Fahrer je nach Geschicklichkeit das Fahrzeug noch auf dem gewünschten Kurs halten. Überschreiten Gierwinkelgeschwindigkeit bzw. Schwimmwinkel gewisse Grenzen, so ist auch der geübte Fahrer unter Umständen nicht mehr in der Lage, den Schleudervorgang unter Kontrolle zu halten.

Aufgrund der Kinematik eines Schleudervorgangs erfahren die Reifen eines Kraftfahrzeugs außerdem mit zunehmendem Schwimmwinkel eine Abnahme der wirksamen Umfangskraft. Der hieraus resultierende Druckabbau bewirkt eine Zunahme der Seitenführungskräfte an der Vorderachse; wodurch sich je nach eingestelltem Lenkwinkel eine unkontrollierbare Fahrtrichtungsänderung ergeben kann, die das Schleudern weiter verstärkt.

Aus der DE 42 19 750 ist ein Antiblockierregelsystem für ein Kraftfahrzeug bekannt, das normalerweise in Abhängigkeit vom Bewegungsverhalten der Fahrzeugräder (Radverzögerung, Radbeschleunigung und/oder Radschlupf) den Bremsdruck an den Fahrzeugrädern variiert und bei Erkennen des Schleuderns des Fahrzeugs durch Bremsdruckaufbau wenigstens einen Teil der Räder in hohen Schlupf bringt, vorzugsweise diese blockiert, wobei Voraussetzung für die Schleudererkennung ist, daß.wenigstens ein Hinterrad in einem vorgegebenen Verzögerungsband liegt und an ihm über eine vorgegebene Zeit Druck abgebaut wurde, wobei dann auf Schleudern erkannt wird, wenn die beiden genannten Bedingungen gleichzeitig und für eine vorgegebene Zeit anstehen.

Aus der WO 90/02064 (bzw. DE 38 27 883) ist es bekannt, bei eindeutiger Feststellung einer derartigen problematischen Fahrsituation die Vorderräder stark zu bremsen (in hohen Schlupf zu bringen) bzw. zu blockieren, wodurch das Fahrzeug sich wieder in Fahrtrichtung orientieren kann. Eine zusätzliche Unterstützung kann durch eine Bremskraftbeeinflussung an den Hinterrädern erfolgen. Zur Schleudererkennung wird in dieser Druckschrift die Summe der Differenzen Druckabbauzeit minus Druckaufbauzeit wenigstens an einem Vorder- und einem Hinterrad bestimmt, wobei die ermittelte Zeit mit der Gesamtregelzeit ins Verhältnis gesetzt wird und auf ein Schleudern erkannt wird, wenn dieses Verhältnis einen vorgegebenen Wert überschreitet. Dieses Verfahren wird als relativ aufwendig angesehen, da durch die Ermittlung des Verhältnisses in nicht unerheblichem Maße Rechnerkapazität gebunden wird.

Bei einem erkannten Schleudern des Fahrzeuges werden die Vorderräder stark gebremst. Die Bremsung der Vorderräder soll dabei so stark sein, daß die Vorderräder nahezu keine Seitenkraft mehr übertragen können. Im Idealfall blockieren die Vorderräder, d. h. aufgrund des Bremseneingriffs an den Vorderrädern existiert an diesen keine Seitenführung mehr. An den Hinterrädern werden für gewöhnlich solche Bremseneingriffe nicht durchgeführt, d. h. die Hinterräder werden nicht stark gebremst. An den Hinterrädern werden im Normalfall lediglich Bremseneingriffe des Antiblockiersystems bzw. der Bremsschlupfregelung durchgeführt, d. h. die Räder der Hinterachse befinden sich in einem stabilen Zustand, sie können Seitenkräfte übertragen. Dies führt dazu, daß die Hinterachse des Fahrzeuges einen Pol bildet, um den sich das Fahrzeug drehen kann. Vergegenwärtigt man sich den zeitlichen Ablauf, mit dem die einzelnen Schritte ablaufen, so ist nachvollziehbar, daß sich das Fahrzeug wieder in Fahrtrichtung orientieren kann. Zunächst wird ein Schleudern des Fahrzeugs erkannt. Dieses Erkennen erfolgt dabei so rechtzeitig, daß das Fahrzeug, bezogen auf seine ursprüngliche Fahrtrichtung bzw. Orientierung, die vor dem Beginn des Schleuderns vorlag, noch keinen allzu großen Drehwinkel um seine Hochachse aufweist. Das heißt, das Fahrzeug hat sich gegenüber seiner ursprünglichen Fahrtrichtung noch nicht allzu sehr gedreht. Sobald das Schleudern erkannt wird, werden die Vorderräder stark gebremst. wodurch an den Vorderrädern keine Seitenführung mehr vorhanden ist. Da die Hinterräder noch die Seitenkräfte aufweisen, die vor Beginn des Schleuderns vorlagen, und somit eine Seitenführung ermöglichen, wird das Fahrzeug um seine Hinterachse zurück in die Fahrtrichtung gedreht.

Werden zusätzlich zu den Rädern der Vorderachse auch die Räder der Hinterachse in hohen Schlupf gebracht, d. h. blockiert, so kann sich das Fahrzeug nicht mehr in seine ursprüngliche Fahrtrichtung zurück orientieren, d. h. die Drehbewegung des Fahrzeuges um seine Hochachse wird reduziert bzw. begrenzt. In diesem Fall wird die Bewegung des Fahrzeuges auf eine im wesentlichen rein translatorische Bewegung zurückgeführt. In diesem Fall folgt die Bewegung des Fahrzeugs der Bewegung seines Schwerpunktes. Liegt am Beispiel vor dem Blockieren der Vorderräder und der Hinterräder eine Kurvenfahrt vor, so bewegt sich das Fahrzeug ausgehend von der Kurvenfahrt auf der Tangente zur Kurve weiter. Die gleichzeitige Bremsung der Vorderräder und der Hinterräder wird mit Blick auf eine Schadensbegrenzung durchgeführt.

Aufgabe der vorliegenden Erfindung ist die Schaffung einer Vorrichtung zur Regelung des Radschlupfs für Kraftfahrzeuge, bei der in einfacher und unaufwendiger Weise ein Schleuderzustand des Kraftfahrzeugs erkannt werden kann.

Diese Aufgabe wird gelöst durch eine Vorrichtung zur Regelung des Radschlupfs mit den Merkmalen des Patentanspruches 1 sowie ein entsprechendes Verfahren mit den Merkmalen des Patentanspruchs 4. Durch den erfindungsgemäßen Einsatz von Raddrehzahlsensoren mit Drehrichtungserkennung ist eine einfache Möglichkeit geschaffen, ausgehend von einem Antiblockiersystem bzw. einer Bremsschlupfregelung ohne aufwendige Zusatzsensorik einen Schleudervorgang zu erkennen. Hierdurch kann vermieden werden, daß bei einem Schleudervorgang aufgrund einer Fehlinterpretation durch eine stattfindende Bremsschlupfregelung beim Schleudern der Druck in der Radbremse reduziert wird. Bei Verwendung beispielsweise von induktiven Drehzahlsensoren ist eine Drehrichtungserkennung z.B. mittels entsprechender Formung der an einer Induktionsspule vorbeilaufenden Zähne eines Rotors realisierbar. Neben der entsprechenden Formung der Zähne kann die Drehrichtung auch mit Hilfe eines Sensors erkannt werden, der zwei phasenversetzte Signale erzeugt bzw. der digitalisierte Signale bereitstellt, die aus dem durch Induktion erzeugten Signal mit Hilfe von Triggerschaltungen erzeugt wird, wie es der unter dem Aktenzeichen DE 199 37 964 beim Deutschen Patent- und Markenamt eingereichten Anmeldung zu entnehmen ist.

Vorteilhafte Ausgestaltungen der erfindungsgemäßen Vorrichtung zur Regelung des Radschlupfes sind Gegenstand der Unteransprüche.

Gemäß einer bevorzugten Ausführungsform weist die Vorrichtung zur Regelung des Radschlupfes Mittel zur Bremsung der Hinterräder im Falle des Erkennens eines Schleuderzustands auf. Hierdurch ergibt sich, wie oben beschrieben, eine translatorische Bewegung des Fahrzeugs. Zweckmäßigerweise weist die erfindungsgemäße Vorrichtung zur Regelung des Radschlupfes Mittel zum Unterbinden einer stattfindenden Bremsschlupfregelung im Falle des Erkennens eines Schleuderzustandes auf. Durch das Unterbinden der stattfindenden Bremsschlupfregelung wird ein Anstieg des Bremsdruckes zumindest in den Vorderrädern über den Blockierbremsdruck hinaus zugelassen. Das Unterbinden wird beispielsweise dadurch erreicht, daß die Ansteuersignale für die den einzelnen Rädern zugeordneten Aktuatoren vom Bremsschlupfregler entweder nicht ausgegeben werden oder aber für die Ansteuersignale vordefinierte Signale, die zu einer ganz bestimmten Ansteuerung der Aktuatoren führen, ausgegeben werden. Bei den Aktuatoren handelt es sich bei einer hydraulischen bzw. elektrohydraulischen bzw. pneumatischen bzw. elektropneumatischen Bremsanlage um Magnetventile. Bei einer elektromechanischen Bremsanlage handelt es sich um elektrische Stellmotoren.

Handelt es sich bei der Vorrichtung zur Regelung des Radschlupfes um eine reine Bremsschlupfregelung, so steigt der Bremsdruck maximal auf das vom Fahrer vorgegebene Druckniveau, d. h. den Fahrervordruck an, welches aufgrund der Betätigung des Bremspedals vorliegt. Liegt demzufolge solch eine Betätigung des Bremspedals vor, daß eine Bremsschlupfregelung normalerweise eingreifen würde, so kann durch die Unterbindung der Bremsschlupfregelung der Bremsdruck so weit aufgebaut werden, daß die Räder blockieren. Liegt allerdings eine Bremspedalbetätigung vor, die nicht zu einem Eingriff der Bremsschlupfregelung führt, so können die Räder durch die Unterbindung der Bremsschlupfregelung zwar nicht blockiert, jedoch in hohen Schlupf gebracht werden.

Handelt es sich bei der Vorrichtung zur Regelung des Bremsschlupfes um eine Antriebsschlupfregelung oder um eine Fahrdynamikregelung, so kann fahrerunabhängig ein Bremsdruck oder eine Bremskraft aufgebaut werden. Liegt keine Betätigung des Bremspedals durch den Fahrer vor, so kann durch einen fahrerunabhängig durchgeführten Bremseneingriff ein Bremsdruck oder eine Bremskraft erzeugt werden. Liegt bereits eine Betätigung des Bremspedals vor, so kann der Bremsdruck oder die Bremskraft über das vom Fahrer vorgegebene Niveau hinaus erhöht werden. Das heißt, mit einer Bremsanlage, die einen fahrerunabhängigen Aufbau des Bremsdrucks oder der Bremskraft ermöglicht, kann auf jeden Fall ein Blockieren der Räder erreicht werden.

An dieser Stelle sei noch erwähnt, daß ausgehend von einer Bremsschlupfregelung, die dem Ausführungsbeispiel zugrunde liegen soll, das in den hohen Schlupf bringen bzw. das Blockieren der Vorderräder quasi als ein Sonderbetriebsmodus der Bremsschlupfregelung anzusehen ist, da solche Radzustände durch eine Bremsschlupfregelung von Haus aus vermieden werden sollen.

Eine bevorzugte Ausführungsform der erfindungsgemäßen Vorrichtung zur Regelung des Radschlupfes wird nun anhand der beigefügten Zeichnung im einzelnen erläutert. Es zeigt
- Figur 1.: ein Prinzipdiagramm zur Erläuterung der wesentlichen Komponenten der erfindungsgemäßen Vorrichtung zur Regelung des Radschlupfes, und
- Figur 2: ein Blockdiagramm zum Betrieb einer erfindungsgemäßen Vorrichtung zur Regelung des Radschlupfes zur Vermeidung eines Schleuderzustands.

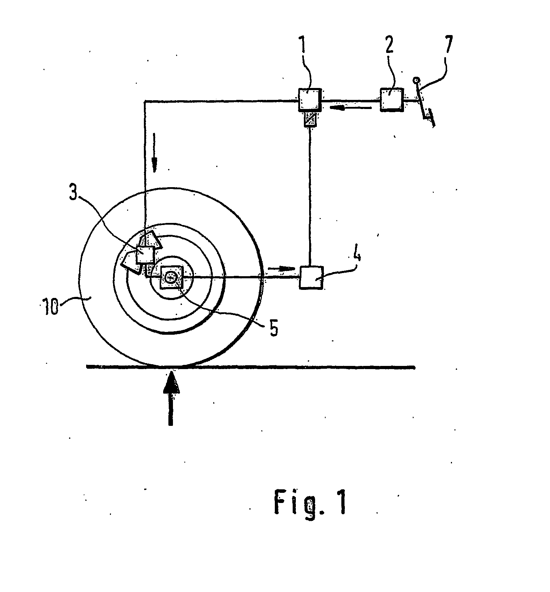

Nachfolgend wird auf Figur 1 eingegangen, wobei die Funktionsweise der Vorrichtung zur Regelung des Radschlupfes für den Fall einer hydraulisch realisierten Bremsschlupfregelung beschrieben wird. Der Übersichtlichkeit halber ist in Figur 1 lediglich ein Rad dargestellt. Dies soll keine Einschränkung darstellen. Die erfindungsgemäße Vorrichtung zur Regelung des Radschlupfes ist selbstverständlich auch für Fahrzeuge mit einer beliebigen Anzahl von Rädern einsetzbar.

Die in Figur 1 dargestellte Vorrichtung zur Regelung des Bremsschlupfes regelt bei einer Bremsung (mittels Betätigung des mit einem Hydroaggregat 1 und einem Hauptzylinder 2 in Verbindung stehenden Bremspedals 7) den Bremsdruck in den jeweiligen Bremszylindern 3 der Fahrzeugräder 10 in Abhängigkeit von Radbeschleunigung bzw. Radverzögerung bzw. Radschlupf. Hierzu liefern Raddrehzahlsensoren 5 Impulse zum Erfassen der jeweiligen Raddrehzahl, welche einem elektronischen Steuergerät 4 zugeführt werden. Im elektronischen Steuergerät 4 werden die Signale der Raddrehzahlsensoren 5 ausgewertet, der zur optimalen Bremsung zulässige Schlupf ermittelt und der Bremsdruck in den jeweiligen Radbremszylindern 3 geregelt.

Das in Figur 1 dargestellte Hydroaggregat 1 enthält Magnetventile, die von ihrer Anschlußbelegung her funktionell den einzelnen Radbremszylindern zugeordnet sind. Ebenfalls enthält das Hydroaggregat wenigstens eine Pumpe, mit der zumindest Bremsmedium aus den Radbremszylindern in den Hauptbremszylinder zurück zur Vermeidung eines Radblockierens befördert werden kann. Mit Hilfe dieses Hydroaggregats kann unabhängig vom Fahrer der Bremsdruck in bekannter Art und Weise konstant gehalten, abgesenkt und wieder auf das vom Fahrer eingestellte Druckniveau angehoben werden.

Handelt es sich bei der Vorrichtung zur Regelung des Radschlupfes um eine Antriebsschlupfregelung oder um eine Fahrdynamikregelung, so weist das Hydroaggregat weitere, funktionell dem Hauptbremszylinder zugeordnete Magnetventile auf. Durch entsprechende Ansteuerung dieser Ventile und gleichzeitige Betätigung der Pumpe kann der Bremsdruck zusätzlich noch fahrerunabhängig über das vom Fahrer eingestellte Druckniveau hinaus aufgebaut werden.

Im Vortriebsfall wird bei Überschreiten einer Schwelle für den Antriebsschlupf durch eine in bekannter Weise stattfindende Ansteuerung der im Hydroaggregat enthaltenen Ventile bzw. Pumpe in den Bremszylindern der Antriebsräder fahrerunabhängig Bremsdruck aufgebaut. Dadurch wird der Antriebsschlupf reduziert. Auch im Vortriebsfall werden die Raddrehzahlen im Steuergerät 4 ausgewertet.

Bei einer Fahrdynamikregelung wird eine Abweichung zwischen einer mit Hilfe eines geeigneten Sensors gemessenen Gierrate und einem Sollwert für die Gierrate gebildet. Diese Abweichung wird in Sollschlupfwerte für die einzelnen Räder umgesetzt, die durch entsprechende Ansteuerung der Ventile und der Pumpe eingestellt werden.

Erfindungsgemäß sind die Raddrehzahlsensoren 5 zum Erkennen eines Schleuderzustands des Fahrzeugs mit einer Einrichtung zur Drehrichtungserkennung ausgebildet.

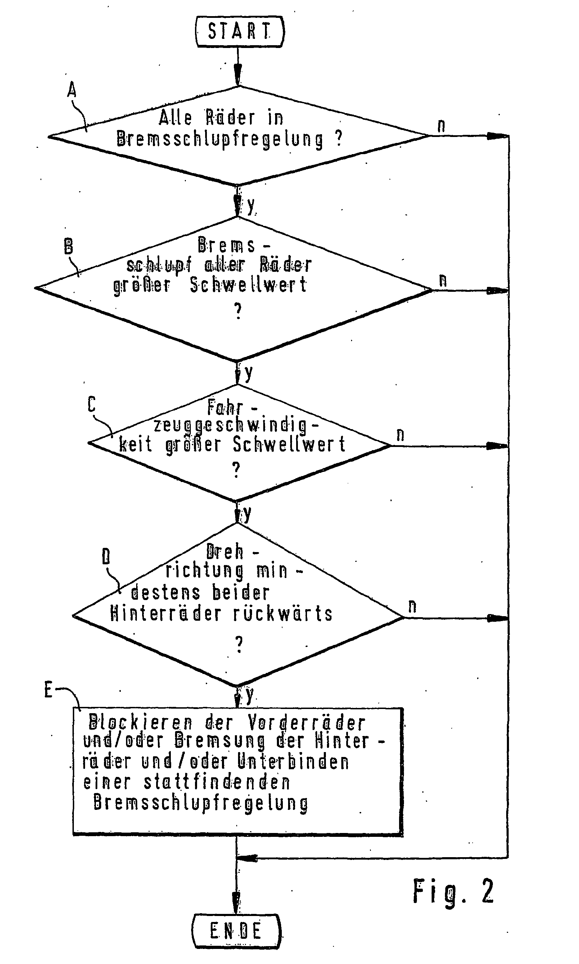

Die Wirkungsweise der erfindungsgemäßen Vorrichtung zur Regelung des Radschlupfes wird nun anhand der Figur 2 erläutert. Die in Figur 2 dargestellte Regelung ist in gleicher Weise für ein Kraftfahrzeug mit Frontantrieb oder Heckantrieb einsetzbar. Der dargestellte Ablauf benötigt hierbei keine Anpassung an die jeweilige Antriebsart. Es sei der Vollständigkeit halber erwähnt, daß für den Fall, daß eine spezielle Anpassung an das Antriebskonzept des Fahrzeugs erforderlich bzw. wünschenswert ist, es denkbar ist, daß der Algorithmus im Vorfeld im Rahmen der Applikation angepaßt wird.

Im in Figur 2 beschriebenen Fall wird in der dargestellten Reihenfolge festgestellt, ob alle Räder in Bremsschlupfregelung befindlich sind (Schritt A), ob der Bremsschlupf aller Räder einen Schwellwert übersteigt (Schritt B) und ob die Fahrzeuggeschwindigkeit einen weiteren Schwellwert übersteigt (Schritt C). Im Falle der Bejahung dieser Bedingungen wird mittels der Raddrehzahlsensoren 5 mit Drehrichtungserkennung festgestellt, ob die Drehrichtung mindestens zweier Hinterräder rückwärts bzw. umgekehrt verläuft (Schritt D). Bei Bejahung auch dieser Bedingung wird auf einen Schleuderzustand geschlossen, und ein Blockieren der Vorderräder und/oder eine Bremsung der Hinterräder und/oder ein Unterbinden einer stattfindenden Bremsschlupfregelung des Kraftfahrzeuges mittels des in Figur 1 dargestellten Regelkreises eingeleitet (Schritt E). Das heißt, für die Vorderräder wird, wie bereits beschrieben, der Bremsdruck erhöht. Unterstützend kann eine zusätzliche Bremsung der Hinterräder vorgesehen sein. Alternativ bietet es sich an, die stattfindende Bremsschlupfregelung zu unterbinden. Sowohl im Anschluß an den Schritt E als auch für den Fall, daß eine der in den Schritten A, B, C bzw. D stattfindende Abfrage nicht erfüllt ist, wird die Bearbeitung beendet. Beim nächsten Aufruf durch die Routine des Bremsschlupfreglers beginnt die Bearbeitung erneut von vorn.

Bei der Erkennung des Schleuderzustandes wird das charakteristische Verhalten eines Fahrzeugs bei einem Schleudervorgang ausgenutzt: Bei Schwimmwinkeln von weniger als 90° kommt es aufgrund der sich verändernden Verhältnisse von Umfangs- zu Seitenkräften, welche auf die Räder wirken, zu einer Verlangsamung und schließlich zum Stillstand der Radumfangsgeschwindigkeiten. Dies gilt insbesondere für Räder der nicht angetriebenen Achse. Oberhalb eines Schwimmwinkels von 90° kehrt sich die Drehrichtung der Räder um und das Fahrzeug bewegt sich rückwärts. Dieser Zustand wird von den Raddrehzahlsensoren 5 mit Drehrichtungserkennung erfaßt. Wird ein derartiger Zustand sicher erkannt, läßt sich durch die beschriebene Maßnahme des Blockierens der Vorderräder bzw. durch starkes Überbremsen der Vorderräder mittels der Vorrichtung zur Regelung des Bremsschlupfes diese kritische Fahrsituation entschärfen. Hierdurch können unkontrollierbare Fahrzeugbewegungen vermieden bzw. ein ins Schleudern geratenes Fahrzeug abgefangen werden. Bei entsprechender Gewichtung der von den Vorderräder bzw. Hinterrädern erhaltenen Drehzahl- bzw. Drehrichtungsinformation sind auch weitere kritische Fahrzustände bzw. -manöver, wie beispielsweise Driften, wirksam beherrschbar bzw. vermeidbar.

Ergänzend kann eine Bremsung der Hinterräder vorgesehen sein. Alternativ bietet es sich an, die stattfindende Bremsschlupfregelung zu unterbinden.

## Patentansprüche

1. Vorrichtung zur Regelung des Radschlupfes,
insbesondere zur Regelung des Brems- und/oder Antriebsschlupfes einzelner Räder für ein Kraftfahrzeug,
mittels der in Abhängigkeit von dem Bewegungsverhalten der Fahrzeugräder ein an den Fahrzeugrädern anliegender Bremsdruck variierbar und/oder einstellbar ist,
mit
- Mitteln (3, 4) zur Bremsung, insbesondere zur Blockierung, wenigstens der Vorderräder und/oder der Hinterräder des Kraftfahrzeuges im Falle des Erkennens eines Schleuderzustandes und
- Raddrehzahlsensoren (5), deren Signale eine Information über die Drehrichtung des jeweiligen Rades enthalten,
**dadurch gekennzeichnet, dass**
die Erkennung, ob ein Schleuderzustand vorliegt, dann durchgeführt wird, wenn
- sich alle Räder des Fahrzeuges in Bremsschlupfregelung befinden (Schritt A), und
- für alle Räder der Bremsschlupf größer als ein zugehöriger Schwellwert ist (Schritt B), und
- die Fahrzeuggeschwindigkeit größer als ein zugehöriger Schwellwert ist (Schritt C), und
- die Drehrichtung wenigstens zweier Hinterräder rückwärts bzw. umgekehrt verläuft (Schritt D).

2. Vorrichtung nach Anspruch 1, **gekennzeichnet durch** Mittel (3,4) zur Bremsung der Hinterräder des Kraftfahrzeuges im Falle des Erkennens eines Schleuderzustandes.

3. Vorrichtung nach einem der Ansprüche 1 oder 2, **gekennzeichnet durch** Mittel (4) zum Unterbinden der stattfindenden Bremsschlupfregelung im Falle des Erkennens eines Schleuderzustandes.

4. Verfahren zur Regelung des Radschlupfes,
insbesondere zur Regelung des Brems-und/oder Antriebsschlupfes einzelner Räder für ein Kfz,
bei welchem
- in Abhängigkeit von dem Bewegungsverhalten der Fahrzeugräder ein an den Fahrzeugrädern anliegender Bremsdruck variiert und/oder eingestellt wird, und
- eine Bremsung, insbesondere eine Blockierung, wenigstens der Vorderräder und/oder der Hinterräder des Kraftfahrzeuges im Falle des Erkennens eines Schleuderzustandes durchgeführt wird, und
- eine Information über die Drehrichtung der jeweiligen Fahrzeugräder mittels Signalen von Raddrehzahlsensoren des Fahrzeuges zur Verfügung gestellt wird, **dadurch gekennzeichnet, daß**
die Erkennung, ob ein Schleuderzustand vorliegt, dann durchgeführt wird, wenn
- sich alle Räder des Fahrzeuges in Bremsschlupfregelung befinden (Schritt A), und
- für alle Räder der Bremsschlupf größer als ein zugehöriger Schwellwert ist (Schritt B), und
- wenn die Fahrzeuggeschwindigkeit größer als ein zugehöriger Schwellwert ist (Schritt C), und
- die Drehrichtung wenigstens zweier Hinterräder rückwärts bzw. umgekehrt verläuft (Schritt D).

5. Verfahren nach Anspruch 4, **dadurch gekennzeichnet, dass** im Falle des Erkennens eines Schleuderzustandes eine Bremsung der Hinterräder des Kraftfahrzeuges durchgeführt wird.

6. Verfahren nach einem der Ansprüche 4 oder 5, **dadurch gekennzeichnet, dass** im Falle des Erkennens eines Schleuderzustandes ein Unterbinden der stattfindenden Bremsschlupfregelung erfolgt.

## Claims

1. Device for controlling the wheel slip,
in particular for controlling the brake slip and/or traction slip of individual wheels for a motor vehicle, by means of which a brake pressure which can be applied to the vehicle wheels can be varied and/or adjusted as a function of the movement behaviour,
having
- means (3, 4) for braking, in particular for locking, at least the front wheels and/or the rear wheels of the motor vehicle if a skidding state is detected, and
- wheel speed sensors (5), the signals of which contain information about the rotational direction of the respective wheel,
**characterized in that**
the detection as to whether a skidding state is present is carried out when
- all the wheels of the vehicle are in the brake slip control mode (step A), and
- the brake slip is greater than an associated threshold value for all the wheels (step B), and
- the velocity of the vehicle is higher than an associated threshold value (step C),and
- the rotational direction of at least two rear wheels is in a rearward direction, or vice versa (step D).

2. Device according to Claim 1, **characterized by** means (3, 4) for braking the rear wheels of the motor vehicle if a skidding state is detected.

3. Device according to one of Claims 1 and 2, **characterized by** means (4) for preventing the brake slip control from taking place if a skidding state is detected.

4. Method for controlling the wheel slip,
in particular for controlling the brake slip and/or traction slip of individual wheels for a motor vehicle, in which
- a brake pressure which is applied to the vehicle wheels is varied and/or adjusted as a function of the movement behaviour of the vehicle wheels, and
- braking, in particular locking, is carried out at least for front wheels and/or the rear wheels of the motor vehicle if a skidding state is detected, and
- information about the rotational direction of the respective vehicle wheels is made available by means of signals of wheel speed sensors of the vehicle,
**characterized in that**
the detection as to whether a skidding state is present is carried out when
- all the wheels of the vehicle are in the brake slip control mode (step A), and
- the brake slip is higher than an associated threshold value for all the wheels (step B), and
- when the velocity of the vehicle is higher than an associated threshold value (step C), and
- the rotational direction of at least two rear wheels is in a rearward direction or vice versa (step D).

5. Method according to Claim 4, **characterized in that** if a skidding state is detected the rear wheels of the motor vehicle are braked.

6. Method according to one of Claims 4 or 5, **characterized in that** if a skidding state is detected the brake slip control which takes place is prevented.

## Revendications

1. Dispositif de régulation du patinage des roues, notamment pour la régulation du patinage des freins et/ou de l'entraînement de roues individuelles d'un véhicule automobile,
au moyen duquel, en fonction du comportement de déplacement des roues du véhicule, une pression de freinage s'appliquant aux roues du véhicule peut être variée et/ou ajustée,
comprenant
- des moyens (3, 4) pour le freinage, notamment pour le blocage, d'au moins les roues avant et/ou les roues arrière du véhicule automobile dans le cas d'une détection d'un état de dérapage et
- des capteurs de vitesse de rotation des roues (5), dont les signaux contiennent une information relative au sens de rotation de la roue respective,
**caractérisé en ce que**
la détection d'un état de dérapage est effectuée si
- toutes les roues du véhicule sont dans un état de régulation de patinage des freins (étape A) et
- pour toutes les roues, le patinage des freins est supérieur à une valeur seuil associée (étape B), et
- la vitesse du véhicule est supérieure à une valeur seuil associée (étape C), et
- le sens de rotation d'au moins deux roues arrière est vers l'arrière ou est inversé (étape D).

2. Dispositif selon la revendication 1, **caractérisé par** des moyens (3, 4) pour freiner les roues arrière du véhicule automobile dans le cas d'une détection d'un état de dérapage.

3. Dispositif selon l'une quelconque des revendications 1 ou 2, **caractérisé par** des moyens (4) pour supprimer la régulation du patinage des freins qui a lieu, dans le cas d'une détection d'un état de dérapage.

4. Procédé de régulation du patinage des roues, notamment pour la régulation du patinage des freins et/ou de l'entraînement de roues individuelles d'un véhicule automobile,
dans lequel
- en fonction du comportement de déplacement des roues du véhicule, une pression de freinage s'appliquant aux roues du véhicule est variée et/ou ajustée, et
- un freinage, notamment un blocage, d'au moins les roues avant et/ou les roues arrière du véhicule automobile est effectué dans le cas d'une détection d'un état de dérapage, et
- une information relative au sens de rotation de la roue respective du véhicule est fournie au moyen de signaux de capteurs de vitesse de rotation des roues du véhicule,
**caractérisé en ce que**
la détection d'un état de dérapage est effectuée si
- toutes les roues du véhicule sont dans un état de régulation de patinage des freins (étape A) et
- pour toutes les roues, le patinage des freins est supérieur à une valeur seuil associée (étape B), et
- la vitesse du véhicule est supérieure à une valeur seuil associée (étape C), et
- le sens de rotation d'au moins deux roues arrière est vers l'arrière ou est inversé (étape D).

5. Procédé selon la revendication 4, **caractérisé en ce que** dans le cas de la détection d'un état de dérapage, un freinage des roues arrière du véhicule automobile est effectué.

6. Procédé selon l'une quelconque des revendications 4 ou 5, **caractérisé en ce que** dans le cas de la détection d'un état de dérapage, une suppression de la régulation du patinage des freins qui a lieu se produit.
